# EUROPEAN PATENT APPLICATION

(11) **EP 1 862 100 A1**
(43) Date of publication of application: **05.12.2007**
(21) Application number: 06722005.3
(22) Date of filing: 06.03.2006
(51) Int. Cl.: A47J 36/34, A23L 1/01

(54) **METHOD AND DEVICE FOR ROTATING PAN**

(30) Priority: 07.03.2005 CN 200510033403
(71) Applicant: Liu, Xiaoyong, Shenzhen, Guangdong 518040 (CN)
(72) Inventor: Liu, Xiaoyong, Shenzhen, Guangdong 518040 (CN)
(74) Representative: Richardt, Markus Albert
(86) International application number: PCT/CN2006/000336
(87) International publication number: WO 2006/094452

(57) **Abstract**

The present invention discloses a turning-over method for turning over the cooking material in a cooker, comprising: 1) making the cooker rotate around a rotation axis which is within the edge range of the cooker; and 2) generating an acceleration at an appropriate position or at an appropriate time to cause all or a part of the material inside the cooker to turn over. The present invention also discloses a turning-over device utilizing the above turning-over method, which comprises a cooker, a first motion mechanism and a driving mechanism which is an electric device, a magnetic device, an aerodynamic device, a hydraulic device, and/or a mechanic device. The first motion mechanism comprises a rotation axis lying within the edge of the cooker, and the driving mechanism drives the cooker to rotate around the rotation axis at variable speed.

## Description

### Field of the present invention

This invention relates to a method of turning over the cooking material in a cooker and the device which can be used to implement this method. More particularly, this invention relates to an automatic or semi-automatic method of turning over the material in a cooker during a cooking process as well as the automatic or semi-automatic device for turning over the material in a cooker which is applied in a cooking equipment or a cooking machine.

### Background of the present invention

Turning over the cooking material in a cooker is one of the most important and the most frequent actions during a cooking process, especially during a professional Chinese cooking. Though the action for turning over the material in a cooker can be divided into large turning action, small turning action, or some other actions, all these actions share almost the same motion pattern as well as the same purpose. Namely, the material in a cooker is driven to move and turn over by sudden acceleration, acute deceleration or abrupt halting of the cooker during its curve movement. The material in the cooker is usually to be tossed or thrown into the air (sometimes it is not tossed or thrown into the air) and be fallen onto the center area of the cooker with the material being turned over, and thus an uniform heating and mixing of the material are achieved. During a large turning action which has larger movement range and action force, most or all of the material in the cooker is turned over at one times, while during a small turning action which has smaller movement range and action force, only smaller portion of the material is turned over at one times.

The fully automatic or partially automatic turning over of the materials is one of the most important presumptions for realizing an intelligent automatic or semi-automatic cooking. Therefore, the realization of automatic or semi-automatic of the cooking material is a critical factor for automatic cooking and will greatly decrease labor intensity and increase the accuracy and repeatability of turning over action during a cooking process with better cooking effect.

Chinese patent 92101587.9 discloses an automatic device for cooking which comprises a cooker or a pan mounted on a supporting device which is in turn set on a fulcrum shaft with a first part and a second part extended outward on its each side. The cooker is set on the first part. A driving device drives the second part and thus drives the first part and the cooker to move around the fulcrum shaft within an area between a first position 12, which is basically in the same level with the cooker, and the second position 14, which has a downward angle relative to the horizontal of the cooker. The material in the cooker will be thrown into the air through such kind of motion to be turned over and be uniformly heated. During a turning-over action the material in the cooker is thrown into the air at the tangential direction with the axis of rotation as the center of a circle and the distance from the axis of rotation to the position of the material as the radius of the circle. The force at the thrown point along this tangential direction can be divided into a vertical portion upward and a horizontal portion inward to the cooker. The effect of the turning-over action and the falling point of the material depend mainly on the horizontal portion inward to the cooker. But the rotation axis of the device in this patetn locates outside the cooker. Though the small movement of the second part can be changed into the big movement of the first part in some designs, the horizontal portion is still too small and the speed pattern of the cooker can not be changed when set during a cooking process due to the too large circle with the rotation axis as its center. Even when the material is thrown into the air at the first position 12 where the horizontal portion is the biggest this horizontal portion is still too small. The course of the movement is too simple to be controlled. The material can not be turned over well and the fallen position of the material is difficult to be controlled, with some material even falling outside the cooker. In addition, there are some other drawbacks in the above device. For example, if the speed pattern of the cooker is changed according to different dishes then the piston and related parts are needed to be readjusted and such readjustment is rather fussy and inaccurate. Furthermore, the device in this patent can not be designed to turn over around the rotation axis and thus to discharge the cooked material. The poor stability, strong impact and large space resulting from the swing structure of the device would bring about great difficulties for implementing other functions of an automatic cooking device.

Chinese patent 98232654.8 discloses an automatic cooker for Chinese dishes which comprises a cooker mounted on a rotation axis. An electric motor drives the cooker and a heating device to rotate back and forth and thus the material in the cooker is stirred and turned over continuously to be heated uniformly. The cooker in this patent can realize only rotate back and forth, and the material in the cooker can not be thrown into air and thus be turned over. Therefore, the design in this patent could not perform the turning-over action like a human chef.

### Description of the present invention

An object of the present invention is to provide an automatic or semi-automatic method which can be used to turn over the cooking material in a cooker in an accurate and controllable manner. In the method of the present invention a cooker is driven by a driving mechanism, and it accelerates, decelerates or stops abruptly at suitable time or suitable position to make the cooking material in the cooker turn over.

Another object of the present invention is to provide a turning-over device which can be used to implement the above method. The turning-over device of the present invention can be used in various cooking equipments, especially in an automatic or semi-automatic cooking machine for Chinese or Western dishes which can perform the turning-over action with more accuracy and individuation than that performed by a human being. The turning-over device of the present invention has good stability and requires small space.

One of the objects of the present invention can be achieved through the following automatic or semi-automatic method for turning over the cooking material in a cooker, comprising:
1) making the cooker rotate around a rotation axis which is within the edge range of the cooker; and
2) generating an acceleration at an appropriate position or at an appropriate time to cause all or a part of the cooking material inside the cooker to turn over.

The term "the edge range of the cooker" used above means the widest part of the cooker plus the diameter range of the rotation axis as well as its vertical projection area. This rotation axis can be parallel to the opening plane defined by the edge of the cooker. Of course it can not be parallel to the opening plane defined by the edge of the cooker. But preferably the rotation axis is parallel to the opening plane defined by the edge of the cooker or parallel to the horizontal level. The rotation axis can be located at or near the tangent direction of the edge of the cooker line, at the position within the edge of the cooker, cross the center of the opening plane defined by the edge of the cooker, or at or near the position of the cooker body. "The opening plane defined by the edge of the cooker" here refers to the plane of the cooker mouth defined by the edge of the cooker, or the plane defined by the widest points of the cooker peripheral. The vertical position of the rotation axis can be adjusted accordingly.

The acceleration mentioned above can be positive, negative or zero. It can be constant or variable. Different accelerations can be used to produce acute acceleration, abrupt deceleration or sudden stop for different dishes. And even in the cooking process of one dish the acceleration can be varied.

The appropriate position or the appropriate time mentioned above means the time when a motion mechanism drives the cooker to accelerate acutely, decelerate abruptly or stop suddenly and the best effect for turning over the material in the cooker is obtained. For example, when the opening plane defined by the edge of the cooker is over the horizontal position sudden accelerating or decelerating may cause the thrown material to fall back to the center of the cooker and to turn over more easily because the upward vertical portion of the force decreases while the horizontal portion of the force which points inward to the inside of the cooker increases. The appropriate position or the appropriate time mentioned above may be changed according to different kinds of cooking material, different state of same cooking material, different styles of dishes, different duration of heating, and/or different cooking environment, etc.

In the present invention the method for turning over the material in a cooker mentioned above can further include a step to produce a displacement of the gravity center of the rotation axis. This can be done by the cooker independently or in combination, linearly or curvedly. This displacement can be at constant speed or with an acceleration at certain time or position. Similarly, the acceleration can be positive acceleration, negative acceleration, or zero acceleration, and the acceleration itself can be uniform or variable. The cooker can be accelerated acutely, decelerated abruptly or stopped suddenly by this motion alone or by a combination with the above rotation. This motion can be produced by a second or more motion mechanisms driven by a driving mechanism which causes in turn the cooker to move linearly or curvedly without or with an acceleration. For example, when the cooker tilts and the material leaves the center of the cooker the cooker is applied a forward acceleration, and when the cooker rotates with an acceleration then a backward acceleration and a sudden stop is provided. This will make the material inside be thrown up into the air and turned over more easily. After the material is thrown up into the air the cooker will move to a proper position where the material will fall onto an appropriate place of the cooker. As another example, when the opening plane defined by the edge of the cooker rotates over the horizontal level and forms an certain angle with it, the cooker is accelerated linearly/curvedly upward or upward with deflection to the inside of the cooker. Then a better result for turning over the material is obtained.

In the present invention the acceleration applied can be a rotating acceleration of the cooker, an acceleration of a translational motion which changes the gravity center of the cooker, or the combination thereof.

In the present invention the method for turning over the material in a cooker mentioned above can further comprise assisting the above turning-over action with a turning-over or stirring tool such as a shovel, a ladle, a fork, a stick, a comb, a stirrer with planar or curvy surface, a stirrer which can rotate, make linear movement or make curvilinear movement, etc. This kind of turning-over or stirring tool can be controlled manually, or semi-automatically or automatically by a control system.

In the present invention the method for turning over the material in a cooker mentioned above can further comprise moving the material to a proper position of the cooker before a rotation or a rotating acceleration is started. This can be done through the movement of the cooker or through the above turning-over or stirring tool. For example, the cooker can be tilted beforehand so as to move the material in the cooker away from its center. The proper position mentioned here refers to a place where the material in the cooker can be thrown up into the air, be turned over, or fall back onto a proper place of the cooker more easily when a force, which is generated from the motion of the cooker according to the aforementioned method, is applied onto the material.

The present invention further provides a turning-over device used to implement the above method for turning over the cooking material in a cooker, comprising a first motion mechanism and a driving mechanism. The first motion mechanism mentioned above can be a rotating mechanism which can rotate around a rotation axis. The cooker is fixed on this mechanism or connected to this mechanism. The location of the rotation axis lies within the edge of the cooker. The above driving mechanism is a power device which can provide an acceleration for the first motion mechanism at a proper time during the movement of the cooker. Preferably the above driving mechanism is a driving mechanism which can control or adjust the speed and can generate relatively large acceleration, deceleration or sudden stop, such as a SPG motor.

The above driving mechanism can be an electric device, a magnetic device, an aerodynamic device, a hydraulic device, and/or a mechanic device, which can be with or without a transmission mechanism.

The above turning-over device for turning over the material in a cooker can further include a second motion mechanism which can drive the connected cooker and/or the connected rotating mechanism to move linearly or curvedly. The turning-over device may further include a third or more motion mechanisms which can generate a uniform or variable speed of other types or in other directions which may be needed for turning over the material in the cooker, such as an accelerated linear or curvilinear movement which can make the cooker move upward or upward with deflection to the inside of the cooker when the opening plane defined by the edge of the cooker rotates over the horizontal level and forms an certain angle with it. The rotating mechanism, the second motion mechanism and other motion mechanisms can be mutually independent or in combination with each other. And each motion mechanism may have its own driving mechanism and transmission mechanism, or share all of or a part of the driving mechanisms and transmission mechanisms.

The above turning-over device for turning over the material in a cooker can further include a turning-over or stirring tool such as a shovel, a ladle, a fork, a stick, a comb, a stirrer with planar or curvy surface, a stirrer which can rotate, make linear movement or make curvilinear movement, etc. These turning-over or stirring tools can be controlled manually, or semi-automatically or automatically by a control system, assisting the turning-over device to move, stir or turn over the material inside the cooker.

The above turning-over device for turning over the material in a cooker may further include a position-limiting unit to prevent the material from moving outside the cooker or moving to other undesired positions. For example, a baffle can be mounted to the front part of the cooker for preventing the material from moving outside the cooker when the material moves forward, or mounted to the back part of the cooker for preventing the material from being thrown or turned over to the outside of the cooker. This baffle can be fixed to the cooker, or partly or completely flexibly mounted to the cooker. It can also be movable and will move to a proper position when necessary.

The above turning-over device for turning over the material in a cooker can further include a connection mechanism through which the rotation axis is connected with the cooker. As another embodiment the connection mechanism is a flexible connection mechanism which is installed on a sliding rail and slides on the rail through pulleys, and the cooker is brought to rotate through such a sliding and the material in the cooker is thrown up into the air and turned over. Still as another embodiment the connection mechanism includes a flexible or movable connection mechanism and a fixed connection mechanism, in which the cooker is connected to the movable connection mechanism which is in turn connected to the fixed connection mechanism through the rotation axis so as to rotate the cooker and to turn over the material in it.

The above turning-over device for turning over the material in a cooker can further include a control system which can be a computer, a programmed controller, an electric and/or magnetic unit, an aerodynamic unit, a hydraulic unit, a mechanic unit, etc. The control system can be an independent control system or a control system integrated within the general control system of a cooking equipment. It controls the startup/stop, the movement type such as linear movement, curvilinear movement, rotation and/or the combination thereof, the movement magnitude such as the rotation magnitude and the displacement of the linear or curvilinear movement, and/or the strength such as the speed or the acceleration, etc.

The above control system determines the time and manner of the operation of the turning-over device according to the stored or input information, data, instructions and/or controlling programs which are related to the cooking. Through the driving mechanism and the transmission mechanism the control system controls one, more or all of the parts of the turning-over device. As another example the control system can control a prompt unit to send out a prompt signal in sound, light, electric or text to instruct a human user to operate one, more or all of the parts of the turning-over device.

The present invention still further provides an automatic or semi-automatic cooking equipment in which a turning-over device for turning over the material in a cooker is installed. The turning-over device comprises a cooker, a first motion mechanism and a driving mechanism, in which the driving mechanism can be an electric device, a magnetic device, an aerodynamic device, a hydraulic device, and/or a mechanic device and the first motion mechanism comprises a rotation axis lying within the edge of the cooker. The driving mechanism drives the cooker to rotate around the rotation axis at variable speed.

In the present invention the cooking equipment can further comprise a second or more motion mechanisms which can drive the connected cooker and/or first motion mechanism to move linearly or curvedly. The second or more motion mechanisms can comprise a crank, a connecting rod and a rocker. The electric motor drives the cooker to rotate round the rotation axis through the crank, the connecting rod and the rocker.

In the present invention the cooking equipment can further comprise a connection mechanism through which the rotation axis is connected to the cooker. The connection mechanism can be a flexible connection mechanism which is installed on a sliding rail and slides on the rail through pulleys. The connection mechanism can also includes a flexible or movable connection mechanism together with a fixed connection mechanism, in which the cooker is connected to the movable connection mechanism which is in turn connected to the fixed connection mechanism through the rotation axis.

Compared with the prior art the turning-over method of the present invention can accurately control the movement type, movement magnitude, acceleration, deceleration and sudden stop of a cooker through rotating around a rotation axis within the edge of the cooker as well as the displacement of the gravity center of the rotation axis. Therefore the present method can accurately and precisely perform the turning-over action for turning over the cooking material in the cooker which can not be performed by any prior equipment or method. Still the present method can perform individualized turning-over action according to different kinds of material, different cooking skills and different dishes. The turning-over device in the present invention automatically or semi-automatically turn over the material in a cooker in a manner of high accuracy an individuation.

The turning-over method and turning-over device of the present invention is particularly suitable for an automatic or semi-automatic cooking method and the equipment thereof.

The present invention will be explained in details with specific embodiments and accompanying drawings.

### Brief Description of the Drawings

Fig. 1 is a schematic view of the turning-over device for material in a cooker used in one embodiment of the present invention.
Fig. 2 is a schematic view of the turning-over device for material in a cooker used in another embodiment of the present invention.
Fig. 3 is a schematic view of the turning-over device for material in a cooker used in still another embodiment of the present invention.
Fig. 4 is a schematic view of the turning-over device for material in a cooker used in still another embodiment of the present invention.
Fig. 5 is a schematic view of the turning-over device for material in a cooker used in still another embodiment of the present invention.

### Modes of Embodiments

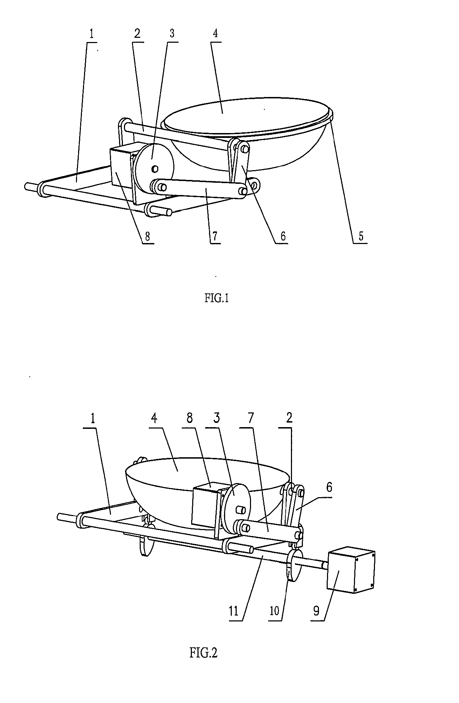

Figure 1 shows one of the turning-over devices of the present invention for turning over the material in a cooker, in which 1 is its frame, 2 is the rotation axis installed on the edge of a cooker which connects cooker 4 through connection mechanism 5. An electric motor 8 drives cooker 4 through crank 3, connecting rod 7 and rocker 6 to rotate around the rotation axis 2. Electric motor 8 can be a SPG motor which drives cooker 4 to accelerate/decelerate acutely or stop suddenly at a proper time and position to turn over or stir the material in cooker 4 under the control of a control system. The crank-rocker mechanism 3, 7 and 6 also generates acute acceleration/deceleration when turning at its inflexion points (turning points). Its different sizes or different ratios will result in different acceleration or deceleration. If the timing of passing the inflexion points is cooperated with the position and speed of the cooker, for example when the opening plane defined by the edge of the cooker passes over the horizontal level and forms a certain angle with the horizontal level, then the cooker 4 will accelerate/decelerate acutely and the material in the cooker 4 will be turned over. The crank and the rocker can be designed to be wholly or partly adjustable in terms of size, proportion, so that they can be adjusted, automatically or semi-automatically, or manually by an operator for different dishes following the instructions from the control system. Of course, these two driving forces can be used separately or in combination for a better effect.

Figure 2 demonstrates another embodiment of the present invention. Rotation axis 2 is installed near the center line of the cooker but preferably with deflection to its outside. In addition to electric motor 8 and crank-rocker mechanism 3, 7, 6 which can provide the abrupt acceleration and deceleration as in Figure 1, electric motor 9 can also cause frame 1 to bring the cooker 4 to do abrupt acceleration or deceleration through driving rotation axis 9 and cam 10 to rotate. And different shapes and sizes of the cam 10 together with different rotation speeds of electric motor 9 can result in different acceleration or deceleration. This acceleration or deceleration, when combined with the position of the cooker 4 at the right time, can turn over or stir the material in the cooker 4. These driving forces for acceleration or deceleration can be used separately or in combination for a better effect

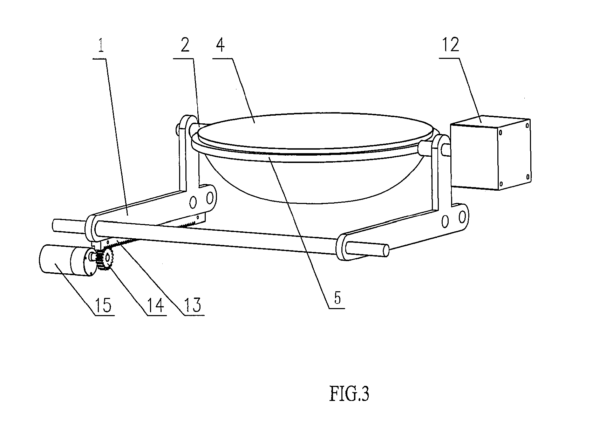

Figure 3 shows still another embodiment of the present invention. Rotation axis 2 is installed on the center line of the cooker 4 and is connected with the cooker 4 through connection mechanism 5. Electric motor 12 drives the cooker 4 to rotate around rotation axis 2 at variable speed. Electric motor 15 drives the frame 1 and the cooker 4 to move linearly at uniform speed or variable speed through gear 14 and rack 13.

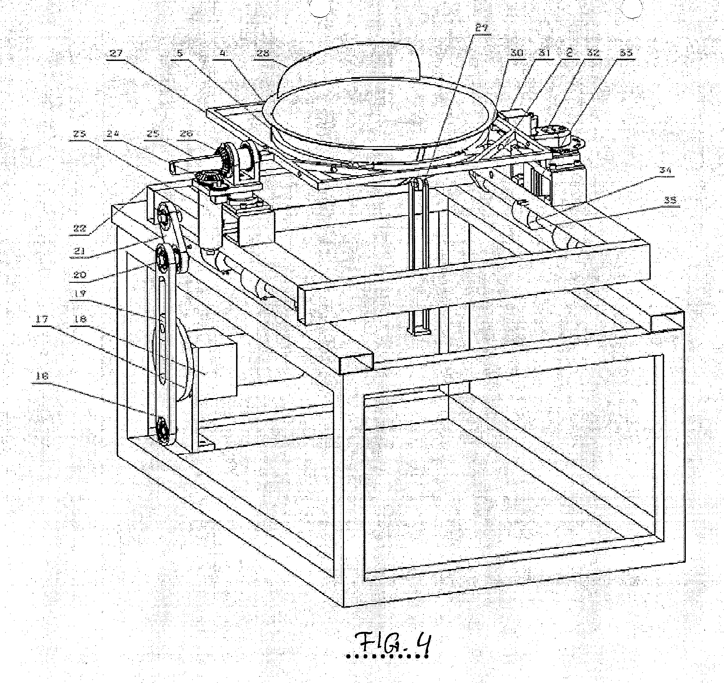

Figure 4 illustrates a fourth embodiment of the present invention. Electric motor 18 drives turn plate 17 to rotate, which makes slider 19 slide in the slot opening of connecting rod 16, causes connecting rod 16 to swing from right to left, and then drives the cooker translational frame 22 to move translationally back and forth t through shaft 20 and connecting rod 21. 35 is a guiding rod for translational motion and 34 is a slider. The cooker 4 is connected to the movable connection mechanism 5 which in turn is connected to the fixed connection mechanism 27 through shaft 2. When the cooker 4 moves translationally along with the translational frame 22, it will rotate around shaft 2 at the action of mandrill pulley 29, the cooker body will rotate upward and generate relatively large acceleration when the connecting rod 16 swings to its extreme. At this moment, the opening plane defined by the edge of the cooker 4 is higher than the horizontal level. With the effect of the acceleration, the material in the cooker is thrown up into the air and turns over (rotates) by itself Thereafter, the cooker 4 is reset back to its original position with reset spring 30. Electric motor 23 for rotating the cooker drives the fixed connection mechanism 27 to rotate through bevel gears 24, 26 and sliding axle 25. This can cause the cooker 4 to rotate upward but at first it brings the cooker 4 to rotate downward, which makes the material move to the front part of the cooker. Then electric motor 33 for swinging the cooker, through crank 32 and connecting rod 31, drives the fixed connection mechanism 27 and the cooker 4 to swing in a plane which helps to move and gather the material to the front part of the cooker. The baffle 28 in the front of the cooker is used to stop the material from moving outside the cooker. It can be an extended part of the front of the cooker itself or it can be fixed on the side of the cooker, movably or in other acceptable ways.

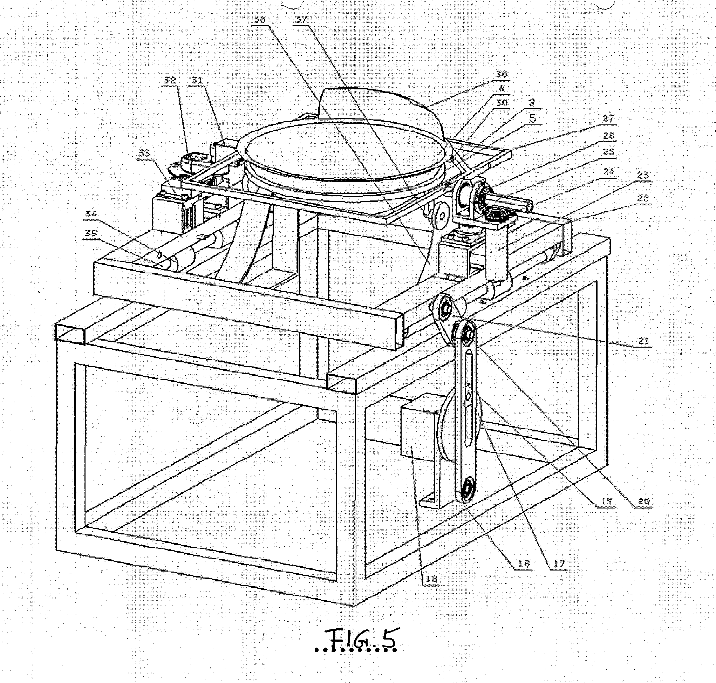

Figure 5 shows an almost same device as that in Figure 4 except the following difference. A pair of idler wheels 37 is mounted on the movable connection mechanism 5. When the cooker moves translationally, the idler wheels 37 will slide on the sliding rail 38 and cause the cooker 4 to rotate upward. The back baffle 36 prevents the material from being thrown outside the cooker. Similarly, it can also be an extension of the back part of the cooker itself or it can be fixed on the side of the cooker, movably or in other acceptable ways.

## Claims

1. A turning-over method for turning over or stirring the cooking material in a cooker, comprising:
1) making said cooker rotate around a rotation axis which is within the edge range of said cooker; and
2) generating an acceleration at an appropriate position or at an appropriate time to cause all or a part of said material inside said cooker to turn over.

2. A turning-over method according to claim 1, wherein said turning-over method further includes a step to produce a displacement of the gravity center of said rotation axis.

3. A turning-over method according to claim 1, wherein said acceleration refers to a rotating acceleration of said cooker generated when said cooker rotates.

4. A turning-over method according to claim 2, wherein said acceleration refers to a rotating acceleration of said cooker generated when said cooker rotates, and/or a translational acceleration of said cooker resulted from said displacement of the gravity center of said cooker.

5. A turning-over method according to claim 1, wherein said turning-over method further includes using a turning-over or stirring tool to cause said material in said cooker to move, stir and/or turn over.

6. A turning-over method according to claim 1, wherein said turning-over method further includes moving said material in said cooker to a proper position before said cooker starts to move or generates said acceleration.

7. A turning-over method according to claim 1, wherein said rotation axis is parallel to the opening plane defined by the edge of said cooker or to the horizontal level.

8. A turning-over device utilizing the turning-over method of claim 1, comprising a cooker, a first motion mechanism and a driving mechanism which is an electric device, a magnetic device, an aerodynamic device, a hydraulic device, and/or a mechanic device, wherein said first motion mechanism comprises a rotation axis lying within the edge of said cooker, and said driving mechanism drives said cooker to rotate around said rotation axis at variable speed.

9. A turning-over device according to claim 8, wherein said turning-over device further comprises a second motion mechanism or more motion mechanisms which drive said cooker and/or said first motion mechanism in connection with it to move linearly or curvedly.

10. A turning-over device according to claim 8, wherein said turning-over device further comprises a baffle located in the front or at the back part of said cooker to prevent said material from moving outside said cooker.

11. A turning-over device according to claim 8, wherein said turning-over device further comprises a connection mechanism through which said rotation axis is connected to said cooker.

12. A turning-over device according to claim 11, wherein said connection mechanism is a movable connection mechanism located on a sliding rail on which said movable connection mechanism slides through an idler wheel.

13. A turning-over device according to claim 11, wherein said connection mechanism comprises a movable connection mechanism and a fixed connection mechanism, said cooker is connected to said movable connection mechanism, and said movable connection mechanism is connected to said fixed connection mechanism through said rotation axis.

14. A turning-over device according to claim 8, wherein said first motion mechanism comprises a crank, a connecting rod and a rocker, and through said crank, said connecting rod and said rocker an electric motor drives said cooker to rotate around said rotation axis.

15. A turning-over device according to claim 8, wherein said turning-over device further comprises a control system.

16. An automatic or semi-automatic cooking equipment, wherein said cooking equipment comprises a turning-over device comprising a cooker, a first motion mechanism and a driving mechanism which is an electric device, a magnetic device, an aerodynamic device, a hydraulic device, and/or a mechanic device, said first motion mechanism comprises a rotation axis lying within the edge of said cooker, and said driving mechanism drives said cooker to rotate around said rotation axis at variable speed.

17. A cooking equipment according to claim 16, wherein said turning-over device further comprises a second motion mechanism or more motion mechanisms which drive said cooker and/or said first motion mechanism in connection with it to move linearly or curvedly.

18. A cooking equipment according to claim 16, wherein said first motion mechanism comprises a crank, a connecting rod and a rocker, and through said crank, said connecting rod and said rocker an electric motor drives said cooker to rotate around said rotation axis.

19. A cooking equipment according to claim 16, wherein said turning-over device further comprises a connection mechanism through which said rotation axis is connected to said cooker.

20. A cooking equipment according to claim 19, wherein said connection mechanism is a movable connection mechanism located on a sliding rail on which said movable connection mechanism slides through an idler wheel.
